# FASCICULE DE BREVET EUROPEEN

(11) **EP 0 903 285 B1**
(45) Date de publication et mention de la délivrance du brevet: **20.11.2002**
(21) Numéro de dépôt: 98420163.2
(22) Date de dépôt: 21.09.1998
(51) Int. Cl.: B62D 25/18

(54) **Bavette anti-projections pour véhicules routiers**
Schmutzfänger gegen das Spritzen für Strassenfahrzeuge
Mudguard flap for motor vehicles

(30) Priorité: 22.09.1997 FR 9711968
(43) Date de publication de la demande: 24.03.1999
(73) Titulaire: FICHET S.A., F-07100 Annonay (FR)
(72) Inventeur: Fichet, Jérôme, 07100 Annonay (FR)
(74) Mandataire: Bratel, Gérard

(56) Documents cités:
- EP-A- 0 074 844
- EP-A- 0 134 156
- EP-A- 0 396 933
- EP-A- 0 556 733
- DE-A- 4 035 107
- FR-A- 2 618 118
- FR-A- 2 638 416
- FR-A- 2 719 278
- GB-A- 2 078 181

## Description

La présente invention concerne une bavette anti-projections destinée à être montée sur des ailes, ailerons, garde-boue ou autres parties de véhicules routiers de tout type, et plus particulièrement de véhicules utilitaires tels que camions, remorques ou semi-remorques. Cette bavette anti-projections est notamment prévue pour être montée en regard d'une roue d'un tel véhicule, de manière à intercepter et évacuer l'eau pouvant être projetée par la roue, au cours du déplacement du véhicule par temps de pluie ou sur un sol mouillé.

On sait que, lors du déplacement des véhicules routiers par temps de pluie, ou sur un sol mouillé, il se produit des projections d'eau entraînées et soulevées par les roues et formant un brouillard. En l'absence de protection particulière, ces projections d'eau réduisent la visibilité en arrière et sur les côtés du véhicule concerné et nuisent à la sécurité des véhicules suivants, notamment pour les dépassements. Par ailleurs, les projections d'eau salissent le véhicule concerné lui-même.

Divers dispositifs, visant à éviter les projections d'eau et leurs conséquences fâcheuses et mêmes dangereuses, ont été déjà envisagés, l'utilisation de ces dispositifs tendant à se généraliser compte tenu des récentes prescriptions officielles (Directives Européennes).

Certains dispositifs anti-projection connus sont constitués d'une feuille en matière synthétique, sur une face de laquelle font saillie, ou sont rapportés, soit des poils en matière plastique, soit un matelas de fils en matière plastique, soit des picots - voir par exemple les documents FR-A-2638416 et EP-A-0134156. D'une façon générale, les dispositifs anti-projections de ce type sont peu efficaces, dans la mesure où ils ne canalisent pas l'eau qui vient les percuter, pour éliminer cette eau.

D'autres dispositifs, se voulant plus efficaces, utilisent le principe de la combinaison de deux parois parallèles, l'une perméable et apte à être traversée par les projections d'eau, et l'autre étanche définissant avec la première un espace intermédiaire servant à capter l'eau et à canaliser cette eau vers le bas du dispositif, pour l'évacuer.

Ces derniers dispositifs peuvent comprendre une plaque plane, perforée, placée devant une plaque étanche pourvue de saillies sous forme de nervures verticales ou de picots, les deux plaques étant réunies sur leurs bords, excepté le bord inférieur - voir par exemple les documents FR-A-2618118 et EP-A-0556733. Un autre dispositif connu, du même genre, est constitué par deux plaques en matière plastique, l'une ondulée et percée de petits trous et l'autre plane, assemblées l'une contre l'autre par des agrafes métalliques.

Dans ces réalisations connues, la faible proportion entre la surface des trous et la surface pleine de la plaque perforée, exposée aux projections, ne permet pas de capter la totalité des projections d'eau. Ce défaut s'aggrave de matière importante au cours de l'usage routier, car les petits trous de la plaque perforée sont rapidement obturés par la boue et les impuretés qui y sont projetées. Par ailleurs, les moyens d'assemblage des deux plaques, notamment les agrafes métalliques, compliquent la structure du dispositif, et nuisent à l'esthétique, ces agrafes étant en particulier visibles sur la face extérieure d'un tel dispositif anti-projections, lorsque celui-ci constitue par lui-même une bavette.

Pour améliorer ces dispositifs anti-projections, aussi bien du point de vue de leur fabrication que de leur efficacité et de leur aspect, il a déjà été envisagé de les réaliser en combinant une paroi pleine et une grille, assemblées l'une à l'autre de manière à délimiter entre elles un espace de canalisation de l'eau, ces deux composants étant réalisables en matière synthétique - voir par exemple les documents DE-A-4035107 et GB-A-2078181.

Selon une réalisation plus particulière, décrite dans le document FR-A-2719278, la grille possède un profil crénelé, avec une alternance de parties relativement larges, éloignées de la paroi pleine pour délimiter des conduits parallèles d'évacuation de l'eau, et de parties relativement étroites, rapprochées de la paroi pleine jusqu'à venir en contact avec celle-ci, et constituant des zones d'assemblage dé la grille avec la paroi pleine, l'assemblage étant réalisable par des soudures.

Cette réalisation conserve encore des insuffisances. D'une part, ses parties en forme de bandes parallèles, correspondant aux zones d'assemblage de la grille à la paroi pleine, représentent au total une surface inactive non négligeable, sur l'étendue de laquelle les projections d'eau ne peuvent être interceptées et évacuées. D'autre part, la présence d'une grille à profil crénelé rigidifie excessivement le dispositif, ce qui rend difficile son cintrage et son découpage, nécessaires dans la pratique pour l'adapter à chaque cas particulier de montage sur un véhicule donné.

On connaît aussi, par le document EP-A-0396933, un dispositif anti-projections pour véhicules routiers, comprenant une paroi pleine, une paroi perméable s'étendant parallèlement à la paroi pleine, et un élément intermédiaire de configuration ondulée, monté dans l'espace situé entre la paroi pleine et la paroi perméable, l'élément intermédiaire ondulé possédant des ondulations parallèles qui viennent tangenter par leurs sommets alternativement la paroi pleine et la paroi perméable, en définissant ainsi des canaux d'évacuation d'eau.

Dans cette réalisation connue particulière, la paroi perméable est un matelas ou une couche en matière filtrante. Surtout, l'élément intermédiaire ondulé est un élément plein, étanche à l'eau, et dont la liaison avec les parois pleine et perméable n'est pas définie. Un tel élément ondulé plein possède divers inconvénients :
- il rigidifie excessivement la structure du dispositif ;
- il n'absorbe pas les projections d'eau, mais les fait rebondir vers l'extérieur ;
- constituant une barrière totalement étanche à l'eau, cet élément limite fortement la section de passage possible pour les canaux d'évacuation d'eau, ces canaux se trouvant uniquement entre la paroi perméable et l'élément ondulé.

Ainsi, le dispositif du document EP-A-0396933 reste d'une efficacité limitée, tout en manquant de souplesse.

La présente invention vise à éliminer tous ces derniers inconvénients, en fournissant un dispositif anti-projections d'une efficacité améliorée, et d'une plus grande souplesse facilitant sa déformation et son découpage pour son adaptation aux conditions particulières à chaque véhicule, tout en restant d'une fabrication simple et économique, et d'un aspect esthétique.

A cet effet, l'invention a pour objet une bavette anti-projections pour véhicules routiers, du genre comprenant une paroi pleine et une paroi perméable, s'étendant parallèlement à la paroi pleine et délimitant avec cette dernière un espace de canalisation de l'eau, cette bavette comprenant encore un élément intermédiaire de configuration ondulée, monté dans l'espace situé entre la paroi pleine et la paroi perméable, les ondulations parallèles de cet élément intermédiaire venant tangenter par leurs sommets alternativement la paroi pleine et la paroi perméable, cette bavette étant caractérisée en ce que la paroi perméable est réalisée sous la forme d'une première grille, en ce que l'élément intermédiaire de configuration ondulée est réalisé sous la forme d'une autre grille, ondulée, en ce que les sommets des ondulations de cette autre grille sont liés alternativement à la paroi pleine et à la première grille, et en ce que des canaux parallèles d'évacuation d'eau sont ainsi délimités, d'une part, entre le première grille et la grille ondulée, et d'autre part, entre cette grille ondulée et la paroi pleine.

Ainsi l'invention prévoit l'adjonction d'une grille supplémentaire, de configuration ondulée, placée entre la paroi pleine et la grille exposée directement aux projections d'eau et de boue, en provenance des roues du véhicule, la grille intermédiaire ondulée assurant la liaison entre la paroi pleine et la première grille. L'ensemble forme une structure de type "sandwich", assurant une cohésion et une stabilité de forme à l'utilisation, même pour des variations importantes de température ambiante.

L'efficacité d'une telle bavette anti-projections est garantie par le fait que la première grille est active sur toute son étendue, et que la grille ondulée renforce l'action de la première grille et délimite, par ses ondulations, une multitude de canaux d'évacuation de l'eau captée par le dispositif, qui imposent à cette eau un trajet vertical en s'opposant à toutes sorties latérales qui constitueraient une gêne à la visibilité. En pratique, pour assurer l'efficacité du dispositif, il est prévu que les mailles de la première grille, ainsi que celles de la grille ondulée, sont de dimension très largement inférieure à la distance séparant la première grille de la paroi pleine.

De préférence, la paroi pleine et les deux grilles sont réalisées en matière synthétique, soudable à chaud, la grille ondulée étant liée d'une part à la paroi pleine, et d'autre part à la première grille, par des points ou lignes de soudure situés au niveau des sommets des ondulations de cette grille ondulée.

Ce mode d'assemblage élimine tous les problèmes posés par les moyens d'assemblage ponctuel métalliques, de type agrafe, et même en matière plastique, du genre rivet ou vis. En particulier, l'assemblage par soudage est simple puisqu'il ne nécessite aucune pièce auxiliaire, et il est aussi esthétique. De plus, étant dans le cas présent réparti uniformément sur toute l'étendue de la bavette (selon le pas régulier et relativement court des ondulations de la grille intermédiaire), cet assemblage par soudage permet une découpe de la bavette dans toutes les directions, donc selon tout contour désiré, sans être gêné par des assemblages ponctuels mal placés et en conservant, après découpage, une parfaite cohésion de la structure.

Le fait de réaliser les trois composants du dispositif dans la même matière synthétique, et sans agrafes métalliques ou rivets plastiques, favorise aussi le recyclage, en fin de vie du véhicule ou lors d'un remplacement de la bavette.

Avantageusement, la grille ondulée est liée à la paroi pleine et à la première grille suivant des lignes de soudure parallèles et interrompues, réalisant chacune une liaison discontinue, à la manière d'une ligne pointillée. On conserve ainsi les propriétés de déformabilité de la bavette anti-projections, notamment dans le sens longitudinal, étant entendu que la paroi pleine se présente par exemple comme une plaque pleine possédant une certaine flexibilité. La flexibilité longitudinale de la bavette, résultant de sa structure générale, peut être encore améliorée par le choix judicieux de l'orientation des fils qui définissent les mailles des deux grilles ; en particulier, il est prévu à cet effet que les mailles des deux grilles sont de forme oblongue, leur plus grande dimension s'étendant transversalement à la direction longitudinale des ondulations de la deuxième grille. La rigidité de la bavette dans le sens transversal peut être beaucoup plus forte, pour permettre au dispositif de conserver dans ce sens sa rectitude, en cours d'utilisation.

Selon un mode de réalisation avantageux de l'invention, la plaque pleine possède des rebords latéraux, s'étendant en direction de la première grille, sensiblement sur toute l'épaisseur de la bavette. Les rebords, assurant une fermeture latérale de la bavette anti-projections, améliorant les performances de fonctionnement de cette bavette en s'opposant aux sorties latérales de l'eau captée et canalisée. Ils procurent aussi un avantage esthétique. Ces rebords latéraux peuvent être ondulés, au moins sur une partie de leur longueur pour former un genre de soufflet et, ainsi, ne pas s'opposer à la flexibilité longitudinale de la bavette.

La bavette anti-projections objet de l'invention peut comporter encore des moyens de fixation ponctuels, notamment à vis, pour son montage à l'intérieur d'une aile de véhicule routier ou sa fixation à un support solidaire du châssis du véhicule concerné, les points de fixation pouvant se situer en n'importe quel endroit de l'étendue de la bavette. Avantageusement, afin de ne pas écraser le dispositif dans les zones de fixation, il est prévu que chaque vis de fixation reçoit, outre son écrou, une rondelle d'appui, laquelle peut en outre retenir en rotation l'écran pendant le serrage de la vis.

Par les moyens précédemment indiqués, la bavette anti-projections peut être notamment appliquée et fixée contre la surface intérieure d'une aile, entourant une roue de véhicule, en épousant grâce à sa flexibilité le ou les rayons de courbure de cette aile, pratiquement sans déformation des grilles. Un autre cas de montage fréquent est toutefois celui d'une bavette fixée seulement par sa partie haute à un support, pouvant être lui-même solidaire du châssis du véhicule concerné.

Dans ce dernier cas, la bavette anti-projections est avantageusement pourvue de raidisseurs, en forme de tiges rigides, qui prennent place dans l'espace situé entre la paroi pleine et la première grille, et plus particulièrement dans des ondulations de la seconde grille montée dans cet espace, les raidisseurs s'étendant sur au moins une fraction de la hauteur totale de la bavette. Selon un mode de réalisation simple, chaque raidisseur se présente comme une tige dont l'extrémité supérieure est recourbée en crochet et située au niveau d'un point de fixation de la bavette à son support, cette extrémité supérieure recourbée étant introduite dans une autre ondulation de la seconde grille, et étant immobilisée par le serrage de la vis de fixation correspondante.

De toute façon, l'invention sera mieux comprise à l'aide de la description qui suit, en référence au dessin schématique annexé représentant, à titres d'exemples, quelques formes d'exécution de cette bavette anti-projection pour véhicules routiers :
Figure 1 est une vue générale, en perspective, montrant une aile de véhicule utilitaire équipée d'une bavette anti-projections conforme à la présente invention ;
Figure 2 est une vue en coupe transversale d'une bavette anti-projections selon l'invention, pouvant être considérée comme une coupe suivant la ligne II-II de figure 1 ;
Figure 3 est un détail à échelle agrandie de la figure 2, montrant la zone de bordure de la bavette anti-projections ;
Figure 4 est une autre vue de détail, illustrant la fixation de cette bavette anti-projections ;
Figure 5 est une vue très partielle, en perspective, d'une bavette anti-projections conforme à l'invention, illustrant le détail de la structure de la bavette ;
Figure 6 est une vue de face d'une variante de cette bavette anti-projections, munie de raidisseurs ;
Figure 7 est une vue en coupe transversale de cette variante avec raidisseurs, suivant la ligne VII-VII de figure 6.

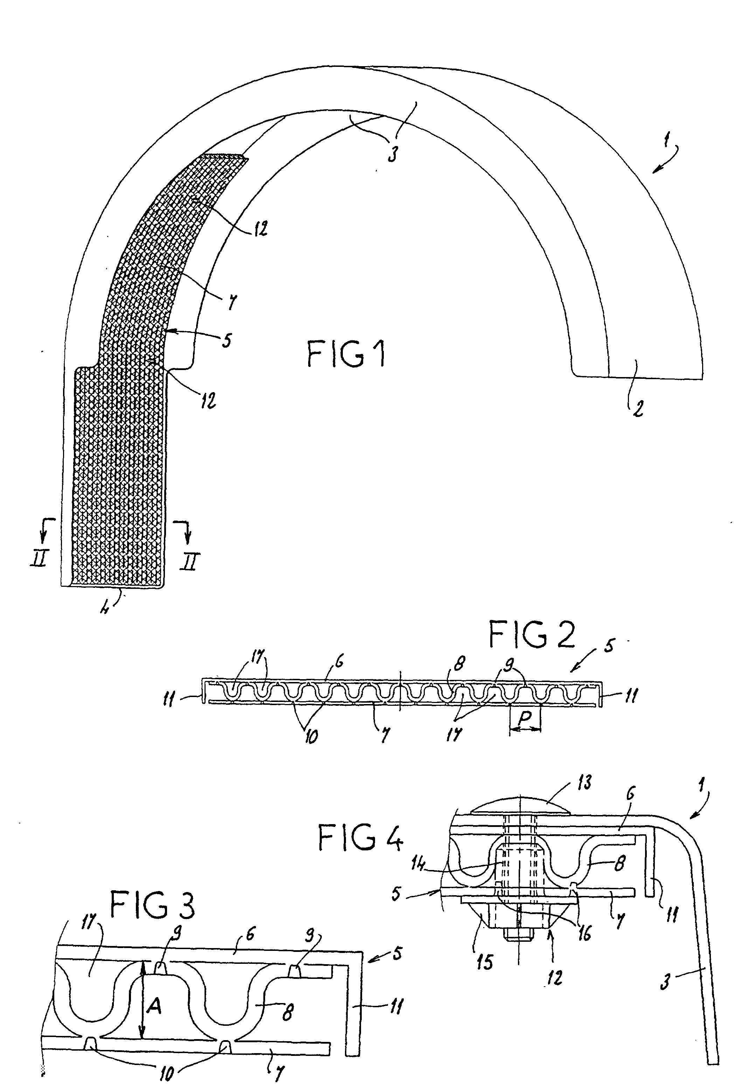

La figure 1 représente une aile 1 de véhicule routier utilitaire, de forme générale arrondie, réalisable en toute matière tel que métal ou matière synthétique. L'aile 1 comporte une surface principale 2 cylindrique, et des rebords latéraux 3 pliés sensiblement à angle droit par rapport à la surface principale 2. Dans l'exemple ici illustré, cette aile 1 est prolongée vers le bas, à l'une de ses extrémités, par une partie 4 plane et sensiblement verticale, servant de support de bavette. La bavette anti-projections, désignée dans son ensemble par le repère 5, est appliquée et fixée à l'intérieur de l'aile 4, contre la partie plane 4 et aussi contre une portion de la surface cylindrique 2 de cette aile 1, de manière à se trouver en regard de la roue de véhicule (non représentée) qui est entourée partiellement par ladite aile 1.

La structure de la bavette anti-projections 5 est illustrée aux figures suivantes 2 à 5, auxquelles il est maintenant fait référence :

D'une façon générale, la bavette anti-projections 5 est constituée par l'assemblage :
- d'une paroi pleine 6, donc imperméable à l'eau,
- d'une première grille 7, s'étendant parallèlement à la paroi pleine 6, et
- d'une deuxième grille 8, de configuration ondulée, qui prend place entre la paroi pleine 6 et la première grille 7.

La paroi pleine 6, du genre "plaque", est initialement plane, mais elle possède une certaine flexibilité qui permet de la déformer et, en particulier, de la cintrer selon un certain rayon de courbure. Cette paroi plane 6, constituant le "fond" de la bavette anti-projections 5, est ici prévue pour être appliquée contre la surface de l'aile 1.

La première grille 7 est, elle aussi, initialement plane, sa structure ajourée permettant naturellement de la cintrer. Cette première grille 7 s'étend parallèlement à la paroi pleine 6, à une distance A, de l'ordre de 1 à 2 centimètres, de cette paroi pleine 6. Les mailles de la première grille 7 possèdent une dimension B qui est très largement inférieure à la distance A séparant ladite première grille 7 de la paroi pleine 6. Lorsque la bavette anti-projections 5 est fixée sur l'aile 1, cette première grille 7 constitue la partie directement exposée aux projections d'eau et de boue provenant de la roue du véhicule concerné.

La deuxième grille 8, montée dans l'espace libre situé entre la paroi pleine 6 et la première grille 7, possède une configuration ondulée avec des ondulations parallèles, qui par leurs sommets viennent tangenter alternativement la paroi pleine 6 et la première grille 7. Les ondulations de la seconde grille 8 possèdent une hauteur constante définissant la distance A entre la paroi pleine 6 et la première grille 7, et un pas régulier P, qui est par exemple d'environ 2,5 cm. La taille des mailles de cette seconde grille 8 est du même ordre que celle B des mailles de la première grille 7. Ces mailles peuvent être définies, dans leurs formes et dimensions, par le croisement de fils qui s'étendent suivant deux directions obliques ; en particulier, on prévoit pour les mailles des deux grilles 7 et 8 une forme oblongue ou en losange, dont la plus grande dimension s'étend transversalement à la direction longitudinale des ondulations de la deuxième grille 8.

Les trois parties constitutives de la bavette anti-projections 5, à savoir la paroi pleine 6 et les deux grilles 7 et 8, sont réalisées en matière synthétique soudable à chaud, notamment en polyéthylène haute densité ou basse densité. La liaison entre ces trois parties, assurant la cohésion de la bavette anti-projections 5, est ainsi réalisée par soudage à chaud, au niveau des sommets des ondulations de la deuxième grille 8 qui, comme déjà mentionné plus haut, viennent tangenter alternativement la paroi pleine 6 et la première grille 7.

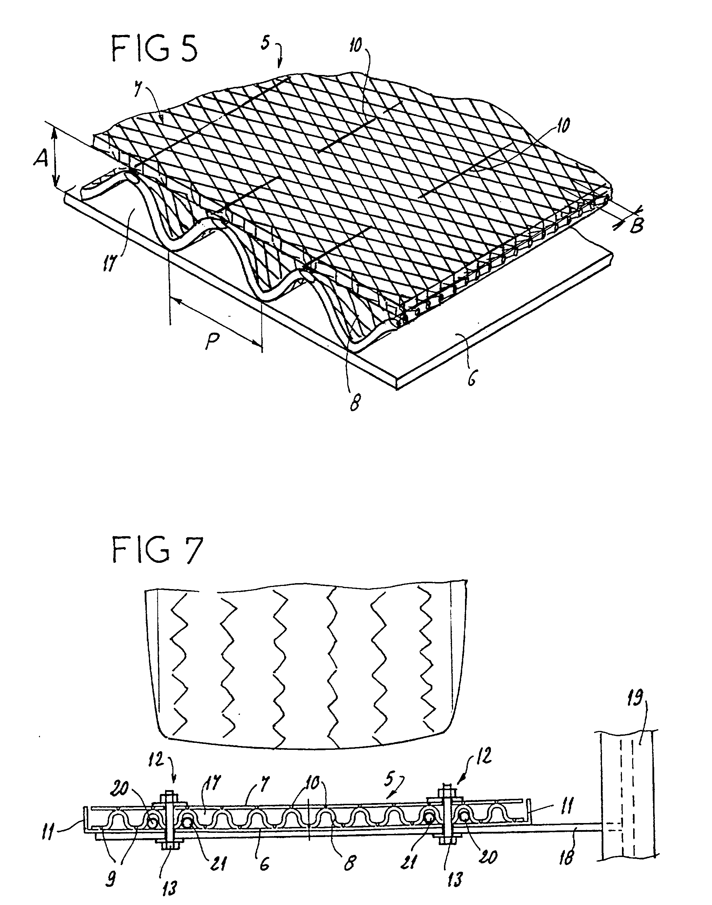

Comme le montrent plus particulièrement les figures 4 et 5, la liaison de la grille ondulée 8 avec la paroi pleine 6 s'effectue suivant des lignes de soudure 9 parallèles entre elles, espacées selon le pas P des ondulations ; de même, la liaison de la grille ondulée 8 avec la première grille 7 s'effectue suivant d'autres lignes de soudure 10 parallèles entre elles et aux précédentes, aussi espacées selon le pas P. Ces lignes de soudure 9 et 10 sont interrompues et se présentent comme des lignes pointillées. L'on obtient ainsi, entre les trois parties constitutives de la bavette anti-projections 5, une liaison qui est uniformément répartie sur toute l'étendue de cette bavette 5, et qui comporte une relativement grande densité de points de liaison, ce qui permet d'effectuer des découpes de toutes formes et dans toutes les directions sans risque de manque de solidarisation entre les différentes parties. De plus, la discontinuité des zones de liaison dans la direction des lignes de soudure 9 et 10 permet d'obtenir une flexibilité supplémentaire de la bavette 5, dans le sens longitudinal des ondulations de la deuxième grille 8.

La structure de la bavette anti-projections 5, précédemment décrite, peut s'étendre indéfiniment aussi bien dans le sens longitudinal que dans le sens transversal. Toutefois, comme le montre notamment la figure 3, les bords longitudinaux de la bavette 5 peuvent comporter un pliage à angle droit de la paroi pleine 6, formant des rebords latéraux 11 qui s'étendent sensiblement sur l'épaisseur de la bavette 5. D'une manière non représentée au dessin, les rebords latéraux 11 peuvent encore être ondulés, par exemple par thermoformage, afin de ne pas s'opposer à la flexion de la bavette 5 dans le sens longitudinal (les rebords 11 ondulés procurant un effet de "soufflet").

La bavette anti-projections 5, fabriquée directement aux formes et dimensions souhaitées, ou convenablement découpée, est mise en place et fixée à l'intérieur de l'aile 1, dans un sens qui n'est pas indifférent car, dans la région verticale de cette bavette 5, la direction longitudinale des ondulations de la deuxième grille 8 doit coïncider avec la verticale. La flexibilité de la bavette 5 leur permet d'épouser la courbure de l'aile 1, pratiquement sans déformation de la première grille 7 (le rayon de courbure restant important). La fixation de la bavette 5 à l'intérieur de l'aile 1 est réalisée en plusieurs points 12, notamment par perçage et boulonnage.

La figure 4 illustre un exemple de fixation de la bavette anti-projections 5, utilisant en chaque point 12 une vis de fixation 13 dont la tête prend place du côté extérieur de l'aile 1. La vis de fixation 13 reçoit un écrou 14 qui prend place dans l'épaisseur de la bavette 5, entre deux ondulations consécutives de la deuxième grille 8. Cette vis 13 reçoit encore, avantageusement, une rondelle d'appui 15 qui évite l'écrasement de la bavette 5 dans la zone de fixation considérée, et qui permet aussi de retenir l'écrou 14 en rotation pendant le serrage, au moyen de plusieurs picots 16 qui viennent se coincer dans les mailles de la première grille 7.

Lorsque le véhicule concerné roule par temps de pluie ou sur un sol mouillé, l'eau et les particules assez petites, projetées par la roue entourée par l'aile 1, passent au travers des mailles de la première grille 7, et sont ensuite évacuées, vers le bas, par les conduits parallèles 17 formés par la grille ondulée 8, insérée entre la paroi pleine 6 et la première grille 7. Dans le cadre de ce fonctionnement, les rebords latéraux 11 améliorent encore l'efficacité de la bavette anti-projections 5, en empêchant que l'eau, canalisée dans les conduits 17, ne ressorte par les côtés de ladite bavette 5.

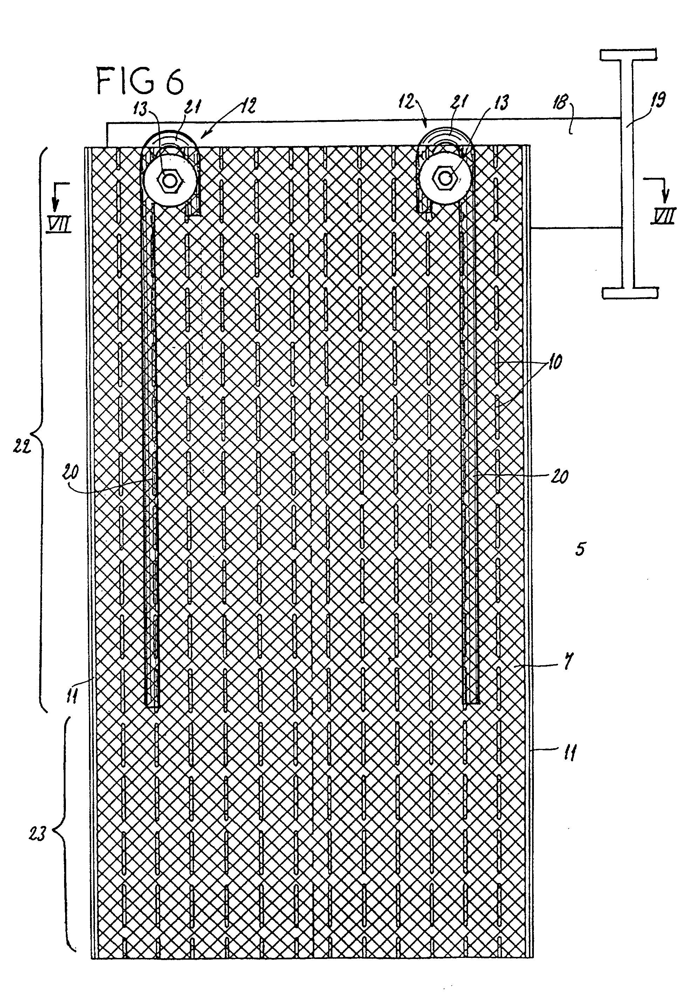

Alors que l'on a décrit jusqu'ici une bavette anti-projections appliquée et fixée contre une aile 1, les figures 6 et 7 montrent une autre bavette anti-projections 5 de relativement grande hauteur, et fixée uniquement par sa partie haute à une barre-support métallique 18 sensiblement horizontale, elle-même solidaire d'un élément de châssis 19 du véhicule concerné.

Dans cette variante, la constitution générale de la bavette anti-projections 5 n'est pas modifiée, et comprend donc encore une paroi pleine 6, une première grille 7 plane, parallèle à la paroi pleine 6, et une deuxième grille 8 ondulée, insérée entre la paroi pleine 6 et la première grille 7.

Cette bavette anti-projections 5 est assemblée par sa partie haute à la barre-support 18, en deux points de fixation 12, et ceci encore au moyen de vis de fixation 13. Une structure de renfort est prévue, s'étendant depuis la partie haute de la bavette 5 et sur une certaine hauteur. Cette structure de renfort comprend deux raidisseurs 20, réalisés par des tiges de section ronde, métalliques ou en matière composite renforcée de fibres de verre, essentiellement rectilignes mais dont l'extrémité supérieure 21 est recourbée en forme de crochet ou de "U". Chaque raidisseur 20 prend place dans l'épaisseur de la bavette 5, dans les ondulations de la deuxième grille 8 entre la paroi pleine 6 et la première grille 7. L'extrémité supérieure recourbée 21 de chaque raidisseur 20 est située au niveau d'un point de fixation 12 de la bavette 5, et peut ainsi être immobilisée par le serrage de la vis de fixation 13, cette extrémité 21 étant introduite dans une ondulation de la grille 8 autre que celle recevant la partie rectiligne principale du raidisseur 20.

On obtient ainsi une bavette anti-projections 5, qui comporte une partie supérieure 22 relativement rigide, et une partie inférieure 23 plus souple. La longueur des raidisseurs 20, qui détermine la hauteur de la partie supérieure rigide 22 de la bavette 5, peut être ajustée selon l'effet désiré et selon les préconisations officielles de résistance à la déflexion arrière (Directive Européenne 91/226).

On peut réaliser la bavette anti-projections :
- en modifiant la forme, et notamment le contour de la bavette anti-projections, en fonction de sa destination ;
- en réalisant cette bavette anti-projections dans tous les matériaux appropriés, plus ou moins épais et résistants, sa paroi pleine formée par une plaque pouvant ainsi être remplacée, au moins partiellement, par un film plus fin par exemple en polyéthylène, qui est suffisant dans les zones où une grande résistance mécanique n'est pas utile ;
- en prévoyant tous moyens adaptés pour la fixation de la bavette anti-projections contre une aile ou sur tout autre support, ces moyens de fixation n'étant pas nécessairement mécaniques et pouvant aussi, selon les matériaux constitutifs de l'aile et ou du support, consister en une fixation par soudage ;
- en montant cette bavette anti-projections sur toutes parties de véhicules routiers, notamment utilitaires, justifiant l'utilisation d'un tel dispositif, qu'il s'agisse ou non de parties telles qu'ailes ou ailerons directement associées aux roues des véhicules, et que cette bavette soit appliquée contre un support ou bien libre, la bavette objet de l'invention pouvant ainsi constituer également une jupe latérale anti-projections, de longueur plus ou moins importante ;
- dans la mesure où la bavette anti-projections est appliquée partiellement contre une partie pleine, telle que la surface intérieure d'une aile ou d'un garde-boue, en limitant la paroi pleine de cette bavette à la zone de ladite bavette qui dépasse de l'aile ou du garde-boue, la paroi de ce dernier pouvant constituer par elle-même la paroi pleine de la bavette dans sa zone appliquée à l'intérieur de l'aile ou du garde-boue.

## Revendications

1. Bavette anti-projections pour véhicules routiers, plus particulièrement pour véhicules utilitaires, comprenant une paroi pleine (6) et une paroi perméable (7), s'étendant parallèlement à la paroi pleine (6) et délimitant avec cette dernière un espace de canalisation de l'eau, et comprenant encore un élément intermédiaire (8), de configuration ondulée, monté dans l'espace situé entre la paroi pleine (6) et la paroi perméable (7), les ondulations parallèles de cet élément intermédiaire (8) venant tangenter par leurs sommets alternativement la paroi pleine (6) et la paroi perméable (7), **caractérisée en ce que** la paroi perméable est réalisée sous la forme d'une première grille (7), **en ce que** l'élément intermédiaire de configuration ondulée est réalisé sous la forme d'une autre grille (8), ondulée, **en ce que** les sommets des ondulations de cette autre grille (8) sont liés alternativement à la paroi pleine (6) et à la première grille (7), et **en ce que** des canaux parallèles (17) d'évacuation d'eau sont ainsi délimités, d'une part, entre le première grille (7) et la grille ondulée (8), et d'autre part, entre cette grille ondulée (8) et la paroi pleine (6).

2. Bavette anti-projections selon la revendication 1, **caractérisée en ce que** les mailles des deux grilles (7,8) sont de forme oblongue,leur plus grande dimension s'étendant transversalement à la direction longitudinale des ondulations de la deuxième grille (8).

3. Bavette anti-projections selon la revendication 1 ou 2, **caractérisée en ce que** la paroi pleine (6) et les deux grilles (7,8) sont réalisées en matière synthétique soudable à chaud, la grille ondulée (8) étant liée d'une part à la paroi pleine (6), et d'autre part à la première grille (7), par des points ou lignes de soudure (9,10) situés au niveau des sommets des ondulations de cette grille ondulée (8).

4. Bavette anti-projections selon la revendication 3, **caractérisée en ce que** la grille ondulée (8) est liée à la paroi pleine (6) et à la première grille (7) suivant des lignes de soudure (9,10) parallèles et interrompues, réalisant chacune une liaison discontinue.

5. Bavette anti-projections selon l'une quelconque des revendications 1 à 4, **caractérisée en ce que** la paroi pleine (6) se présente comme une plaque pleine, qui possède des rebords latéraux (11), s'étendant en direction de la première grille (7), sensiblement sur toute l'épaisseur de la bavette (5).

6. Bavette anti-projection selon la revendication 5, **caractérisée en ce que** les rebords latéraux (11) de la plaque pleine (6) sont ondulés, au moins sur une partie de leur longueur.

7. Bavette anti-projections selon l'une quelconque des revendications 1 à 6, **caractérisée en ce qu'**elle comporte des moyens de fixation ponctuels (12), notamment à vis (13), pour son montage à l'intérieur d'une aile (1) de véhicule routier ou sa fixation à un support (18) solidaire du châssis (19) du véhicule concerné.

8. Bavette anti-projections selon la revendication 7, **caractérisée en ce que** chaque vis de fixation (13) reçoit, outre son écrou (14), une rondelle d'appui (15) évitant l'écrasement de la bavette (5) dans la zone de fixation considérée.

9. Bavette anti-projection selon l'une quelconque des revendications 1 à 8, **caractérisée en ce que**, notamment dans le cas d'une bavette (5) fixée seulement par sa partie haute à un support (18), cette bavette (5) est pourvue de raidisseurs (20), en forme de tiges rigides, prenant place dans l'espace situé entre la paroi pleine (6) et la première grille (7), et plus particulièrement dans des ondulations de la seconde grille (8) montée dans cet espace, les raidisseurs (20) s'étendant sur au moins une fraction de la hauteur totale de la bavette (5).

10. Bavette anti-projections selon l'ensemble des revendications 7 et 9, **caractérisée en ce que** chaque raidisseur (20) se présente comme une tige dont l'extrémité supérieure (21) est recourbée en crochet et située au niveau d'un point de fixation (12) de la bavette (5) à son support (18), cette extrémité supérieure recourbée (21) étant immobilisée par le serrage de la vis de fixation (13) correspondante.

## Patentansprüche

1. Schmutzfänger als Spritzschutz für Strassenfahrzeuge, insbesondere für Nutzfahrzeuge, der eine dichte Wand (6) und eine durchlässige Wand (7) umfasst, welche sich parallel zur dichten Wand (6) erstreckt und mit dieser letzteren einen Raum zur Ableitung des Wassers begrenzt, und der noch ein wellenförmiges Zwischenelement (8) umfasst, das in dem zwischen der dichten Wand (6) und der durchlässigen Wand (7) liegenden Raum angebracht ist, wobei die parallelen Wellen dieses Zwischenelements (8) mit ihren Scheiteln abwechselnd die dichte Wand (6) und die durchlässige Wand (7) berühren, **dadurch gekennzeichnet, dass** die durchlässige Wand in Form eines ersten Gitters (7) ausgeführt ist, und **dadurch, dass** das wellenförmige Zwischenelement in Form eines weiteren gewellten Gitters (8) ausgeführt ist, und dadurch, dass die Wellenscheitel dieses weiteren Gitters (8) abwechselnd mit der dichten Wand (6) und dem ersten Gitter (7) verbunden sind, und **dadurch, dass** so parallele Kanäle (17) zur Ableitung des Wassers gebildet werden, und zwar einerseits zwischen dem ersten Gitter (7) und dem gewellten Gitter (8) und andererseits zwischen diesem gewellten Gitter (8) und der dichten Wand (6).

2. Schmutzfänger als Spritzschutz nach Anspruch 1, **dadurch gekennzeichnet, dass** die Maschen der zwei Gitter (7, 8) eine längliche Form haben, wobei ihre größte Abmessung quer zur Längsrichtung der Wellen des zweiten Gitters (8) verläuft.

3. Schmutzfänger als Spritzschutz nach Anspruch 1 oder 2, **dadurch gekennzeichnet, dass** die dichte Wand (6) und die zwei Gitter (7, 8) aus heiss schweissbarem Kunststoffmaterial hergestellt sind, wobei das gewellte Gitter (8) einerseits mit der dichten Wand (6) und andererseits mit dem ersten Gitter (7) durch Schweisspunkte oder -nähte (9, 10) verbunden ist, die in Höhe der Wellenscheitel dieses gewellten Gitters (8) liegen.

4. Schmutzfänger als Spritzschutz nach Anspruch 3, **dadurch gekennzeichnet, dass** das gewellte Gitter (8) mit der dichten Wand (6) und dem ersten Gitter (7) entlang der Schweissnähte (9, 10) verbunden ist, die parallel und unterbrochen sind, wodurch jede eine unterbrochene Verbindung bildet.

5. Schmutzfänger als Spritzschutz nach einem der Ansprüche 1 bis 4, **dadurch gekennzeichnet, dass** die dichte Wand (6) wie eine vollwandige Platte erscheint, die seitliche Randleisten (11) besitzt, die im wesentlichen über die ganze Breite des Schmutzfängers (5) in die Richtung des ersten Gitters (7) hin verlaufen.

6. Schmutzfänger als Spritzschutz nach Anspruch 5, **dadurch gekennzeichnet, dass** die seitlichen Randleisten (11) der vollwandigen Platte (6) über mindestens einen Teil ihrer Länge gewellt sind.

7. Schmutzfänger als Spritzschutz nach einem der Ansprüche 1 bis 6, **dadurch gekennzeichnet, dass** er Mittel (12) zur punktuellen Befestigung umfasst, insbesondere durch Schrauben (13), für die Montage im Inneren eines Kotflügels (1) eines Straßenfahrzeugs oder für die Befestigung an einem Auflager (18), das mit dem Gestell (19) des betreffenden Fahrzeugs fest verbunden ist.

8. Schmutzfänger als Spritzschutz nach Anspruch 7, **dadurch gekennzeichnet, dass** jede Befestigungsschraube (13), außer ihrer Mutter (14), eine Unterlegscheibe (15) erhält, die verhindert, dass der Schmutzfänger (5) in dem betroffenen Befestigungsbereich gequetscht wird.

9. Schmutzfänger als Spritzschutz nach einem der Ansprüche 1 bis 8, **dadurch gekennzeichnet, dass** insbesondere im Fall eines Schmutzfängers (5), der nur mit seinem oberen Teil an einem Auflager (18) befestigt ist, dieser Schmutzfänger (5) mit Versteifungen (20) in Form von steifen Stäben versehen ist, die in dem Raum zwischen der dichten Wand (6) und dem ersten Gitter (7) sitzen, und noch genauer in Wellen des zweiten Gitters (8), das in diesem Raum montiert ist, wobei sich die Versteifungen (20) mindestens über einen Teil der Gesamthöhe des Schmutzfängers (5) erstrecken.

10. Schmutzfänger als Spritzschutz nach der Gesamtheit der Ansprüche 7 und 9, da**durch gekennzeichet, dass** jede Versteifung (20) wie ein Stab erscheint, dessen oberes Ende (21) hakenförmig gebogen ist und sich auf Höhe eines Befestigungspunktes (12) des Schmutzfängers (5) an seinem Auflager (18) befindet, wobei dieses hakenförmige obere Ende (21) durch Verschraubung mit der entsprechenden Befestigungsschraube (13) festgehalten wird.

## Claims

1. An anti-splash flap for road vehicles, more particularly for commercial vehicles, comprising a solid wall (6) and a permeable wall (7) which extends parallel to the solid wall (6) and which delimits therewith a water channelling space, and also comprising an intermediate element (8) of corrugated configuration which is mounted in the space situated between the solid wall (6) and the permeable wall (7), the solid wall (6) and the permeable wall (7) alternately forming tangents to the vertices of the parallel corrugations of said intermediate element (8), **characterised in that** the permeable wall is produced in the form of a first grid (7), that the intermediate element of corrugated configuration is produced in the form of another, corrugated grid (8), that the vertices of the corrugations of said other grid (8) are joined to the solid wall (6) and to the first grid (7) alternately, and that parallel water discharge ducts (17) are thus delimited, firstly between the first grid (7) and the corrugated grid (8) and secondly between said corrugated grid (8) and the solid wall (6).

2. An anti-splash flap according to claim 1, **characterised in that** the mesh apertures of the two grids (7, 8) are oblong in shape, their major dimension extending transversely to the longitudinal direction of the corrugations of the second grid (8).

3. An anti-splash flap according to claim 1 or 2, **characterised in that** the solid wall (6) and the two grids (7, 8) are made of a hot-weldable synthetic material, the corrugated grid (8) being joined firstly to the solid wall (6) and secondly to the first grid (7) by weld points or weld lines (9, 10) which are situated at the vertices of the corrugations of said corrugated grid (8).

4. An anti-splash flap according to claim 3, **characterised in that** the corrugated grid (8) is joined to the solid wall (6) and to the first grid (7) along parallel, broken weld lines (9, 10) which each form a discontinuous joint.

5. An anti-splash flap according to any one of claims 1 to 4, **characterised in that** the solid wall (6) is in the form of a solid sheet which has lateral edges (11) which extend towards the first grid (7) substantially over the entire thickness of the flap (5).

6. An anti-splash flap according to claim 5, **characterised in that** the lateral edges (11) of the solid sheet (6) are corrugated over at least part of their length.

7. An anti-splash flap according to any one of claims 1 to 6, **characterised in that** it comprises means of point fixing (12), particularly by screws (13), for the installation thereof inside a mudguard (1) of a road vehicle or for the fixation thereof to a support (18) which is integral with the chassis (19) of the vehicle concerned.

8. An anti-splash flap according to claim 7, **characterised in that**, in addition to a nut (14), each fixing screw (13) receives a supporting washer (15) which prevents deformation of the flap (5) in the area of fixation concerned.

9. An anti-splash flap according to any one of claims 1 to 8, **characterised in that**, particularly in the case of a flap (5) which is fixed only by its top part to a support (18), said flap (5) is provided with stiffeners (20) in the form of rigid rods which are placed in the space situated between the solid wall (6) and the first grid (7), and more particularly in corrugations of the second grid (8) which are mounted in said space, said stiffeners (20) extending over at least a fraction of the total height of the flap (5).

10. An anti-splash flap according to claims 7 and 9 together, **characterised in that** each stiffener (20) is formed as a rod, the upper end of (21) of which is curved forming a hook and is situated at the level of a fixing point (12) of the flap (5) to its support (18), said curved upper end (21) being immobilised by tightening the corresponding fixing screw (13).
